**Europäisches Patentamt**

(19) **European Patent Office**

**Office européen des brevets**

(11) Veröffentlichungsnummer: **0 293 324**
**A2**

(12) **EUROPÄISCHE PATENTANMELDUNG**

(21) Anmeldenummer: **88730120.8**

(22) Anmeldetag: **19.05.88**

(51) Int. Cl.⁴: **B 65 G 57/26**

(30) Priorität: **26.05.87 DE 3717867**

(43) Veröffentlichungstag der Anmeldung:
**30.11.88 Patentblatt 88/48**

(84) Benannte Vertragsstaaten:
**AT BE CH DE ES FR GB GR IT LI LU NL SE**

(71) Anmelder: **Schiepe Stapelautomaten GmbH**
**Haynauer-Strasse 72a**
**D-1000 Berlin 46 (DE)**

(72) Erfinder: **Matussek, Ralf**
**Oranienburger-Strasse 82**
**D-1000 Berlin 26 (DE)**

**Szymanski, Hans, Dipl.-Ing.**
**Auf d. Jäger 41**
**D-4630 Bochum 7 (DE)**

(74) Vertreter: **Lüke, Dierck-Wilm, Dipl.-Ing.**
**Gelfertstrasse 56**
**D-1000 Berlin 33 (DE)**

(54) **Stapelvorrichtung.**

(57) Die Erfindung bezieht sich auf eine Stapelvorrichtung mit Einrichtungen zum Abheben des Stapelgutes von einem Förderer 6 und zum Ablegen des Stapelgutes in einer Stapellage eines zu bildenden Stapels 59.

Die Stapelvorrichtung soll ermöglichen, daß auch einzelne, insbesondere kürzere Stapelgutelemente 24 im Stapel hintereinander gestapelt werden können.

Hierzu sieht die Erfindung vor, daß oberhalb des Förderers 6 mehrere Greif- und Hubelemente 90 zum gemeinsamen Abheben des Stapelgutes vom Förderer 6 hintereinander an einem Rahmenträger 8 gelagert sind und daß der Rahmenträger 8 zum Absetzen des Stapelgutes in der zu bildenden Stapellage 5 an einem Gestell 1,7 in eine zum Förderer 6 parallele Lage verfahrbar gelagert ist.

FIG.1

EP 0 293 324 A2

**Beschreibung**

## Stapelvorrichtung

Die Erfindung bezieht sich auf eine Stapelvorrichtung gemäß dem Oberbegriff des Anspruches 1.

Eine solche Stapelvorrichtung ist aus der DE-PS 2.445.536 vorbekannt. Bei dieser Stapelvorrichtung sind an mindestens zwei im Abstand voneinander befindlichen Ständern vertikal verfahrbare Stapelwagen mit horizontal verfahrbaren Tragarmen angeordnet. An Umlaufketten parallel geführte, Anschläge aufweisende Mitnehmer nehmen hierbei das Stapelgut auf der Rückseite der Ständer auf und befördern das Stapelgut auf der Vorderseite der Ständer nach unten, bis das Stapelgut auf die ausgefahrenen Tragarme der Stapelwagen abgesetzt und auf diesen zur Bildung einer Stapellage verschoben wird.

Sobald eine Stapellage die gewünschte Breite erreicht hat, werden die Tragarme zurückgezogen und die Stapelwagen um die Höhe einer Stapellage vertikal verfahren. Die Arbeitsgeschwindigkeit dieser bekannten Stapelvorrichtung ist relativ langsam. Dies ist insbesondere dann nachteilig, wenn diese Stapelvorrichtung nicht als Langholzstapler, sondern als Kurzholzstapler eingesetzt wird. In diesem Falle müssen die beiden Seitenständer dicht zusammengefahren werden, wobei jeweils nur einzelne, kurze Stapelelemente nebeneinander stapelbar sind.

Der Erfindung liegt von daher die Aufgabe zugrunde, eine Stapelvorrichtung der gattungsgemäßen Art zu schaffen, bei der mit geringem Bauaufwand Stapellagen aus hintereinander liegenden Stückgutelementen, insbesondere kurzen Elementen, wie z.B. Friesen (Parkettstäbe) gebildet werden können .

Die Lösung dieser Aufgabe ergibt sich aus den kennzeichnenden Merkmalen des Anspruches 1. Durch Verwendung mehrerer Greif- und Hubelemente in Förderrichtung hintereinander können gleichzeitig mehrere Stapelgutelemente vom Förderer abgehoben und nach dem Verfahren des Rahmenträgers in der zu bildenden Stapellage hintereinander abgelegt werden. Mit der erfindungsgemäßen Stapelvorrichtung kann somit ein Stapel aus Stapellagen gebildet werden, die nicht nur Stapelgutelemente nebeneinander sondern auch Stapelgutelemente hintereinander enthalten. Eine solche Stapelvorrichtung eignet sich insbesondere zur Stapelung von Friesen, d.h. Parkettholz.

Um die einzelnen Stapelgutelemente auch hintereinander und im Abstand voneinander und an beiden Seiten des zu bildenden Stapels bündig abstapeln zu können, sind die Greif- und Hubelemente an am Rahmenträger in Förderrichtung verfahrbaren Wagen gelagert. Um die einzelnen Stapelgutelemente von Stapellage zu Stapellage mauersteinartig versetzt zueinander abstapeln zu können, ist ferner am Rahmenträger ein Rahmen verfahrbar gelagert, wobei die Wagen relativ zu den Rahmenendteilen mittels an diesen gelagerter Umlauftriebe verfahrbar sind. Somit erfolgt bei der erfindungsgemäßen Stapelvorrichtung zunächst ein Abheben der einzelnen, hintereinander auf dem Förderer befindlichen Stapelgutelemente, dann ein Auseinanderfahren der einzelnen Stapelgutelemente mittels der am Rahmen gelagerten Wagen, ferner ein Verfahren des Rahmens relativ zum Rahmenträger, um ein mauersteinartiges Umsetzen der Stapelgutelemente zu erreichen, und schließlich ein Verfahren des Rahmenträgers in eine zum Förderer parallele Ebene, in welcher die dann auf Abstand befindlichen und bezüglich des Stapels einjustierten Stapelgutelemente in der zu bildenden Stapellage abgesetzt werden.

Weitere vorteilhafte Ausgestaltungen der Erfindung ergeben sich aus den weiteren Unteransprüchen. Hier wird insbesondere auf die gemäß Unteranspruch 4 ausgebildeten Umlauftriebe zum Verfahren der Wagen auf dem Rahmen und ferner auf die gemäß Anspruch 11 ausgebildete Jalousie zur Bildung der einzelnen Stapellagen und zu deren Absetzen auf dem zu bildenden Stapel hingewiesen.

Die Erfindung ist nachfolgend anhand einer in den Zeichnungen dargestellten Stapelvorrichtung näher erläutert. Es zeigen:

Fig. 1 eine Draufsicht auf die Stapelvorrichtung,

Fig. 2 eine Seitenansicht der Stapelvorrichtung,

Fig. 3a ein Greif- und Hubelement in einer Seitenansicht,

Fig. 3b die Vorderansicht des Greif- und Hubelementes,

Fig. 3c die Draufsicht des Greif- und Hubelementes,

Fig. 4a die Seitenansicht eines Rahmenendteiles mit darauf befindlichem Wagen-Verfahrantrieb,

Fig. 4b die Seitenansicht des anderen Rahmenendteiles,

Fig. 4c eine Ansicht auf die Umlauftriebe der im Rahmen gelagerten Wagen,

Fig. 4d eine Draufsicht auf die Umlauftriebe,

Fig. 5a eine Seitenansicht des einen Rahmenträgerendteiles mit dem Umlauftrieb zum Verfahren des Rahmens auf dem Rahmenträger,

Fig. 5b eine Seitenansicht des anderen Rahmenträgerendteiles,

Fig. 5c eine Ansicht des Rahmenträgers mit Umlauftrieb für den Antrieb des Rahmens,

Fig. 5d eine Draufsicht hierzu,

Fig. 6 eine prizipielle Ansicht der Umlauftriebe für die Wagen der Greif- und Hubelemente und des Umlauftriebes für den Rahmen,

Fig. 7a-d Prinzipdarstellungen der möglichen Endlagen der Wagen gegenüber dem Rahmenträger,

Fig. 8a eine Seitenansicht des Verfahrantriebes des Rahmenträgers,

Fig. 8b eine Ansicht auf den Rahmenträger,

Fig. 8c eine Draufsicht auf den Verfahrantrieb für den Rahmenträger,

Fig. 9a eine Seitenansicht auf die Abschiebeleiste mit zugehörigem Antriebselement,

Fig. 9b eine Ansicht auf die Abschiebeleiste,

Fig. 9c eine Draufsicht auf die Abschiebeleiste mit ihren Abschiebezylindern,

Fig. 10a eine Seitenansicht auf ein Gestellrahmenteil,

Fig. 10b eine Rückansicht des Gestells,

Fig. 11a eine Vorderansicht des Hubtisches mit darauf gebildetem Stapel,

Fig. 11b eine verkleinerte Vorderansicht des Hubtisches ohne Stapel,

Fig. 11c eine Seitenansicht des Hubtisches,

Fig. 11d eine Draufsicht auf den Hubtisch,

Fig. 12 eine Prinzipskizze der Stapelvorrichtung zur Erläuterung der Funktionsweise ,

Fig. 13 bis Fig. 15 Darstellungen unterschiedlicher Stapelmuster ,

Fig. 16 a eine Vorderansicht des mit der Stapelvorrichtung gebildeten Stapels und darüber befindlichem Stapelleistenautomaten und

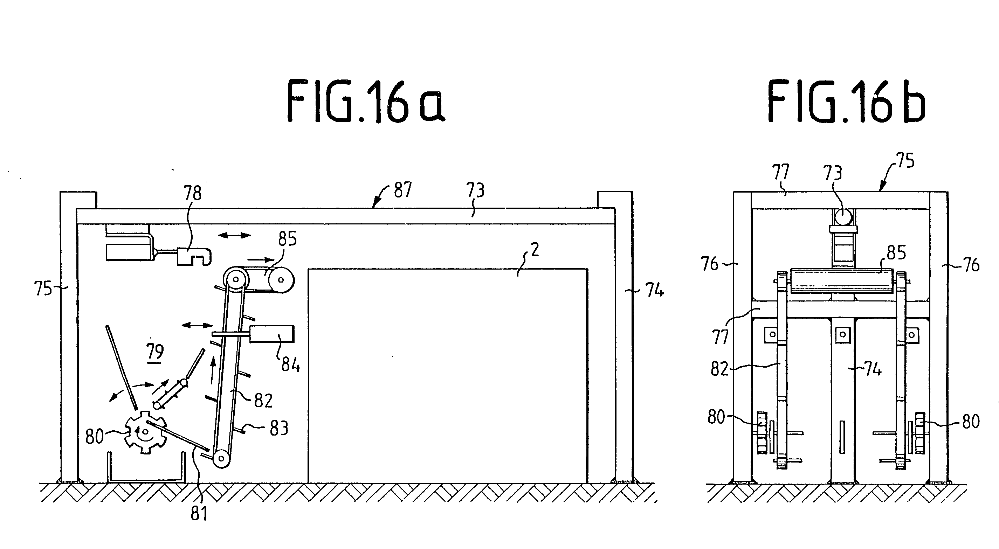

Fig. 16 b eine Seitenansicht des Stapelleistenautomaten.

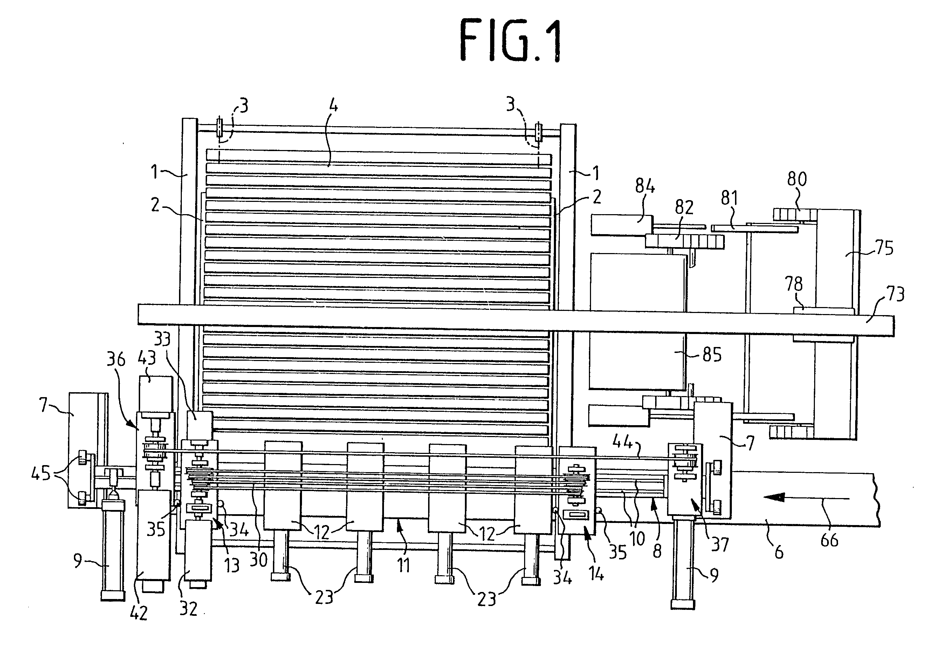

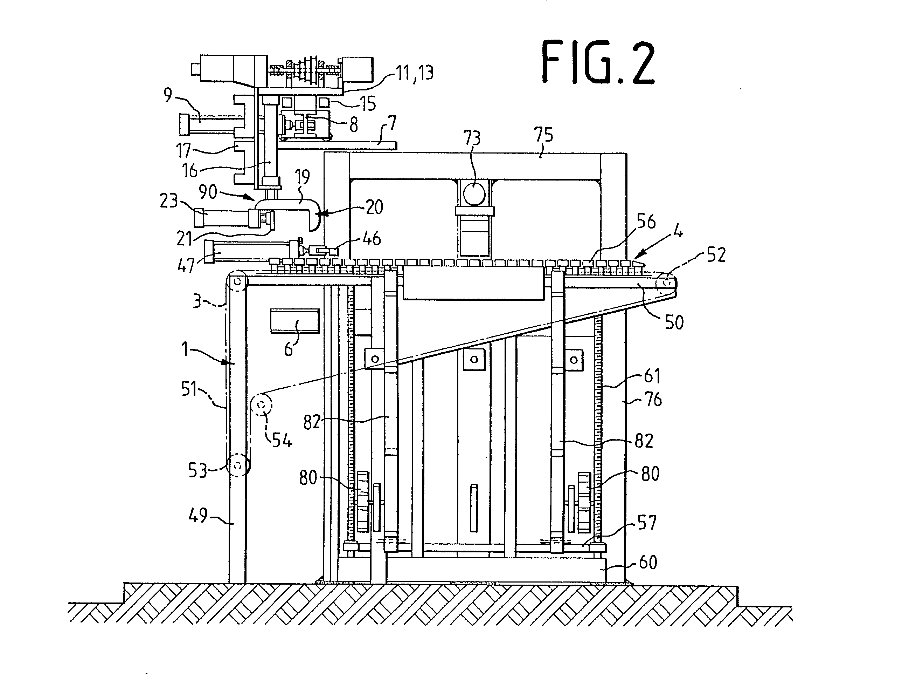

Die Stapelvorrichtung umfaßt ein Gestell aus zwei seitlichen Gestellrahmenteilen 1, zwischen denen ein Stapel 2 zu bilden ist und an denen Rollenketten 3 zur Aufnahme einer Jalousie 4 geführt sind, welche in der in Fig.1 und 2 gezeigten Lage zur Aufnahme und Bildung einer Stapellage 5 dient. Im rückwärtigen Teil der Gestellrahmenteile 1 erstreckt sich ein Förderer 6, der insbesondere aus zwei hintereinander geschalteten, gegenläufigen Förderbändern gebildet ist. Jalousie 4 und Förderer 6 werden später noch detaillierter beschrieben werden.

Oberhalb des Förderers 6 und oberhalb der Jalousie 4 ist auf zwei Gestellteilen 7 ein Rahmenträger 8 senkrecht zur Förderrichtung (Pfeil 66) des Förderers 6 verfahrbar gelagert, dessen Verfahrbarkeit über zwei Umsetzzylinder 9 ermöglicht wird. Auf dem Rahmenträger 8 erstrecken sich zwei parallele Verfahrschienen 10, auf denen einerseits ein Rahmen 11 und andererseits vier Wagen 12 verfahrbar gelagert sind. Der Rahmen 11 umfaßt Rahmenendteile 13,14, die durch zwei Quadratrohre 15 fest miteinander verbunden sind. Zwischen den beiden Rahmenendteilen 13,14 sind die Wagen 12 auf den Verfahrschienen 10 gelagert.

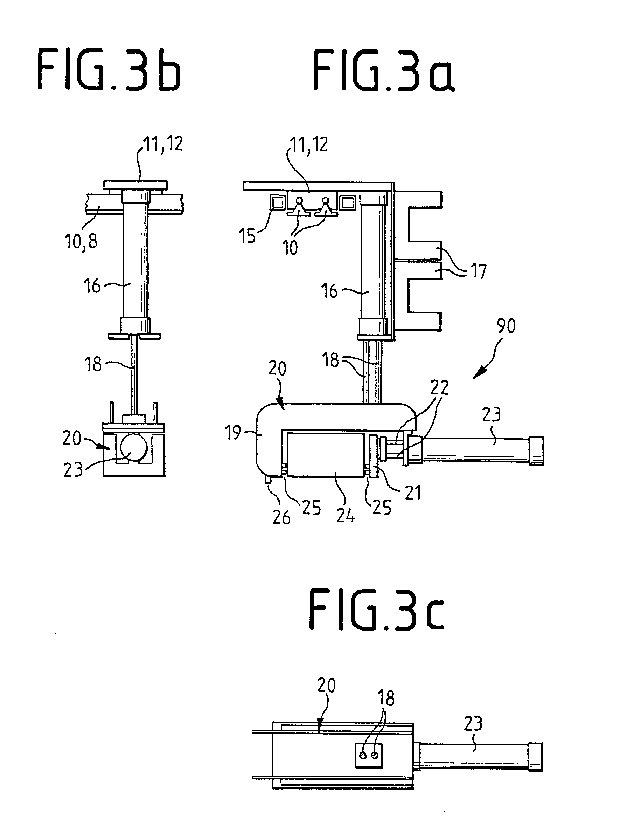

Wie es Fig. 3a, 3b und 3c zeigen, tragen die Wagen 11 auf der Rückseite der Stapelvorrichtung jeweils einen Hubzylinder 16, dem elektrische Steuerventile 17 zugeordnet sind. Jeder Hubzylinder 16 ist mit doppelten Kolbenstangen 18 versehen, die an ihrem freien Ende eine L-förmige feste Backe 19 einer Greifzange 20 tragen , deren bewegliche Backe 21 am freien Ende von doppelten Kolbenstangen 22 befestigt ist, die zu einem an der festen Backe 19 befestigten Spannzylinder 23 gehören. Die doppelten Kolbenstangen 18, 22 von Hubzylinder 16 bzw. Spannzylinder 23 dienen zur Verdrehsicherung. Der Spannzylinder 23 ist in nicht näher dargestellter Weise mit einem Strombegrenzungsventil zur Einstellung der Druckkraft der Backen 19, 21 versehen, um so die Druckkraft selbsttätig auf unterschiedliche Materialien der einzuspannenden Stapelgutelemente 24, z.B. Friesen ( Parketthölzer) einzustellen . Die feste Backe 19 und die bewegliche Backe 21 tragen auf ihren Unterseiten je zwei vertikal übereinander angeordnete Haltespitzen 25, die ebenfalls zur Verdrehsicherung eines eingespannten Stapelgutelementes 24 dienen. Die in Fig. 3a,3b, 3c dargestellten, am Wagen 11 gelagerten Bauteile bilden die Greif- und Hubelemente 90 der Stapelvorrichtung. Ein weiteres Greif- und Hubelement 90 ist an dem in Fig. 1 links dargestellten Rahmenendteil 13 angeordnet. Auf der Unterseite einer jeden festen Backe 19 der Greif- und Hubelemente 90 sind Höhenabtastelemente 26 angeordnet.

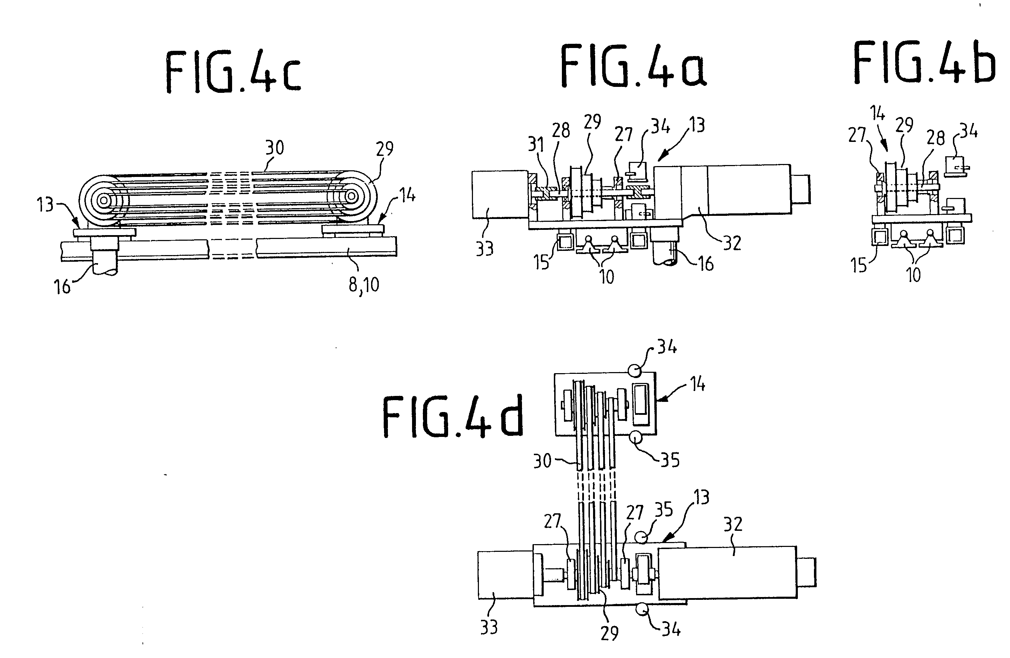

Die Fig. 4a zeigt das linke Rahmenendteil 13 in einer Seitenansicht von links, bezogen auf die Fig. 1. Hier sind die beiden parallelen Verfahrschienen 10 dargestellt, welche das Rahmenendteil 13 gleitbar führen, welches über die Quadratrohre 15 fest mit dem rechten Rahmenendteil 14 verbunden ist, das in Fig. 4b dargestellt ist. In Fig. 4a ist der Hubzylinder 16 nur teilweise dargestellt. Auf beiden Rahmenendteilen 13,14 sind in Lagerböcken 27 Wellen 28 gelagert, welche vier Zahnriemenscheiben 29 unterschiedlicher Durchmesser für vier Zahnriemen 30 tragen. Die Welle 28 des linken Rahmenendteiles 13 (Fig. 4a) ist über Kupplungen 31 einerseits mit einem Getriebemotor 32 und andererseits mit einem inkrementellen Drehaufnehmer 33 verbunden, die jeweils an der Grundplatte des linken Rahmenendteiles 13 befestigt sind.

Die Anordnung von jeweils vier Zahnriemenscheiben 29, die fest auf den Wellen 28 angeordnet sind, und deren gemeinsamer Antrieb durch den Getriebemotor 32 ermöglicht durch Auswahl der unterschiedlichen Durchmesser bzw. Zähnezahlen der Zahnriemenscheiben 29 in gleicher Zeit unterschiedlich definierte Verfahrwege für die vier Wagen 12, denen je ein Greif- und Hubelement 90 gemäß Fig. 3a zugeordnet ist. Da die Winkelgeschwindigkeit aller vier Zahnriemenscheiben 29 bei gemeinsamem Antrieb durch den Getriebemotor 32 über die Welle 28 immer konstant ist, folgen aufgrund der unterschiedlichen Durchmesser der Zahnriemenscheibe 29 unterschiedlich definierte Verfahrwege. Dies dient einem später noch näher erläutert werdenden Zweck.

Wie es Fig. 4d noch zeigt, sind den beiden Rahmenendteilen 13,14 auf den zugewandten Innenseiten noch Endlagentaster 34 und auf den abgewandten Außenseiten weitere Endlagentaster 35 zur Nullsetzung des Rahmens 11 bzw. zur Notausschaltung zugeordnet.

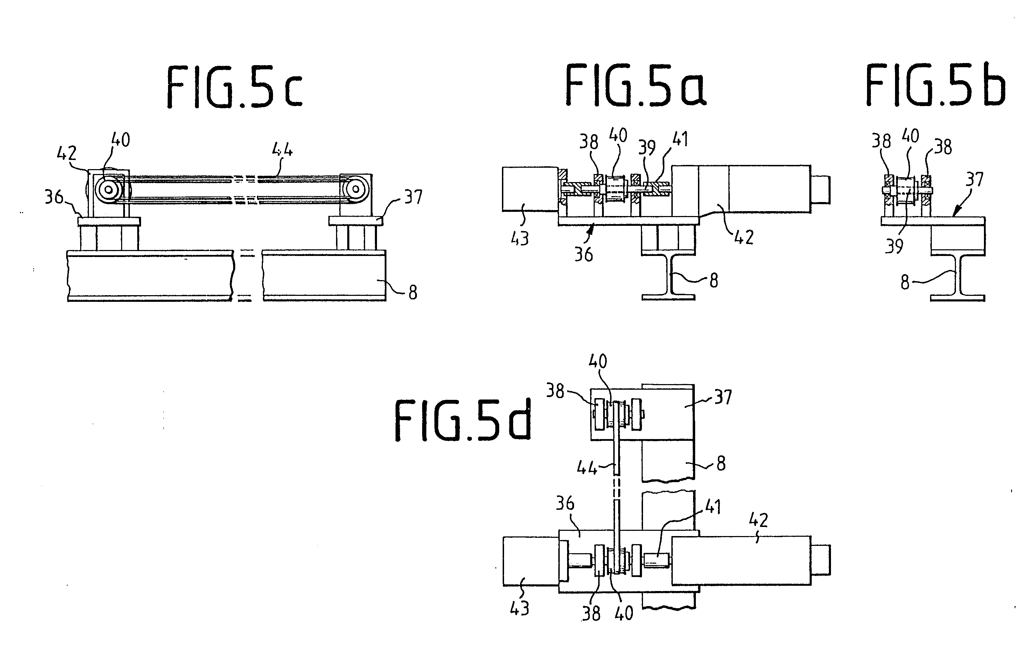

Die Fig. 5a zeigt den Rahmenträger 8 mit seinem linken Rahmenträgerendteil 36 und die Fig. 5b zeigt den Rahmenträger 8 mit seinem rechten Rahmenträgerendteil 37, jeweils in Seitenansicht von links, bezogen auf Fig. 1. Beide plattenförmigen Rahmenendteile 36,37 tragen Lagerböcke 38 für Wellen 39, auf denen je eine Zahnriemenscheibe 40 befestigt ist. Die Welle 39 des linken Rahmenträgerend teiles 36 ist über Kupplungen 41 einerseits mit einem Getriebemotor 42 und andererseits mit einem inkrementellen Drehaufnehmer 43 verbunden, die beide fest mit dem Rahmenträgerendteil 36 verbunden sind. Um die beiden Zahnriemenscheiben 40 läuft ein Zahnriemen 44 um, an welchem der Rahmen 11 festgelegt ist, welcher somit, angetrieben vom Getriebemotor 42, auf den Verfahrschienen 10 des Rahmenträgers 8 zwischen den beiden Rahmenträgerendteilen 36,37 hin- und herfahrbar ist.

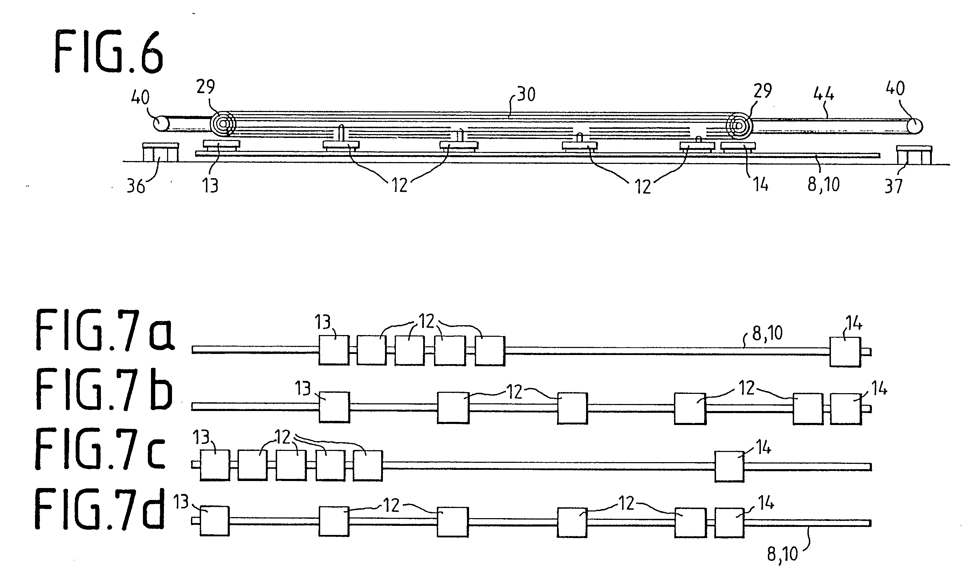

Es wird besonders darauf hingewiesen, daß auch die vier Wagen 12 auf den gleichen Verfahrschienen 10 des Rahmenträgers 8 verfahrbar sind, auf welchen auch die Rahmenendteile 13,14 des Rahmens 11 laufen. Dies zeigt die Prinzipdarstellung gemäß Fig. 6, welche die beiden Zahnriemenscheiben 40 oberhalb der Rahmenträgerendteile 36,37 in jeweils äußerer Position zeigt, wobei um die Zahnriemenscheiben 40 der Zahnriemen 44 umläuft. Rechts neben dem linken Rahmenträgerendteil 36 ist das Rahmenendteil 13 dargestellt. Links neben dem rechten Rahmenträgerendteil 37 ist das Rahmenendteil 14 dargestellt. Oberhalb der beiden Rahmenendteile 13,14 sind die Sätze von je vier Zahnriemenscheiben 29 dargestellt, welche mit je einem Zahnriemen 30 bestückt sind, die aufgrund der unterschiedlichen Durchmesser der Zahnriemenscheibe 29 abgestuft zueinander angeordnet sind. Mit dem inneren Zahnriemen 30 ist der, von links gesehen, erste Wagen verbunden. Der zweite Wagen 12 ist mit zweiten Zahnriemen 30 verbunden. Der dritte Wagen 12 mit dem dritten Zahnriemen 30, der vierte Wagen 12 ist mit dem vierten Zahnriemen 30 verbunden. Somit erreichen alle vier Wagen 12 bei Bewegungsbeginn von links, d.h. vom linken Rahmenendteil 13 aus ihre jeweilige Endstellung in gleicher Zeit. Jedem Wagen 12 und dem linken Rahmenendteil 13 ist je ein Greif und Hubelement 90 zugeordnet, welches in Fig. 3a dargestellt ist.

Die Fig. 7 zeigt einige mögliche Endlagen des Rahmens 11 bzw. der Wagen 12 in Bezug auf den Rahmenträger 8. So zeigt Fig. 7a die Anordnung der vier Wagen 12 links, dicht am linken Rahmenendteil 13. Durch eine Verfahrbewegung können die Wagen 12 relativ zum Rahmen 11 auf gleiche Abstände voneinander verfahren werden, wie es in Fig. 7b dargestellt ist, so daß der rechte Wagen 12 unmittelbar am rechten Ramenendteil 14 anliegt. Gemäß Fig. 7c kann der gesamte Rahmen 11 mit links am Rahmenendteil 13 befindlichen Wagen 12 auf dem Rahmenträger 8 nach rechts versetzt, d.h. eingerückt werden, woraufhin gemäß Fig. 7d die vier Wagen 12 anschließend nach rechts versetzt werden. Durch dieses Einrücken kann die Bildung eines Stapels aus mauersteinartig übereinander gelegten Stapelgutelementen 24 bewirkt werden, wie es später noch näher erläutert werden wird.

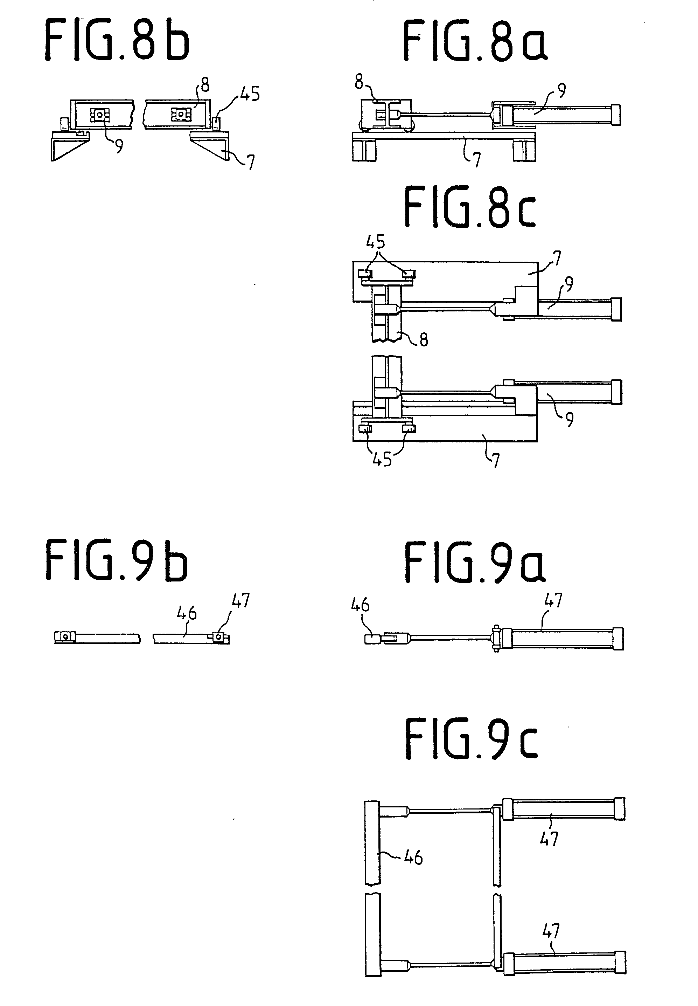

Die Fig. 8a zeigt das in Fig. 1 links angeordnete Gestellteil 7 mit auf diesem verfahrbaren Rahmenträger 8. Zur Verfahrbarkeit weist dieser in Spurrillen geführte Rollen 44 auf, wohingegen auf dem rechten Gestellteil 7 nur einfache Rollen am Rahmenträger 8 angebracht sind. Der Rahmenträger 8 wird über zwei Umsetzzylinder 9 senkrecht zur Förderrichtung des Förderers 6 bewegt, welche Umsetzzylinder 9 an den Gestellteilen 7 befestigt sind. Der Rahmenträger 8 ist aus einem I-Profilträger gebildet.

Oberhalb der Jalousie 4 ist, wie es in Fig. 2 in Verbindung mit Fig. 9a bis 9c dargestellt ist, eine Abschiebeleiste 46 bewegbar gelagert, welche von zwei Abschiebezylindern 47 beaufschlagt ist, die an den Gestellrahmen teilen 1 befestigt sind. Die Abschiebeleiste 46 dient zum Verschieben einer Reihe aus mehreren, hintereinander angeordneten Stapelgutelementen 24 auf der Jalousie 4 in zur Förderrichtung des Förderers 6 senkrechter Richtung, wie es später noch näher erläutert werden wird.

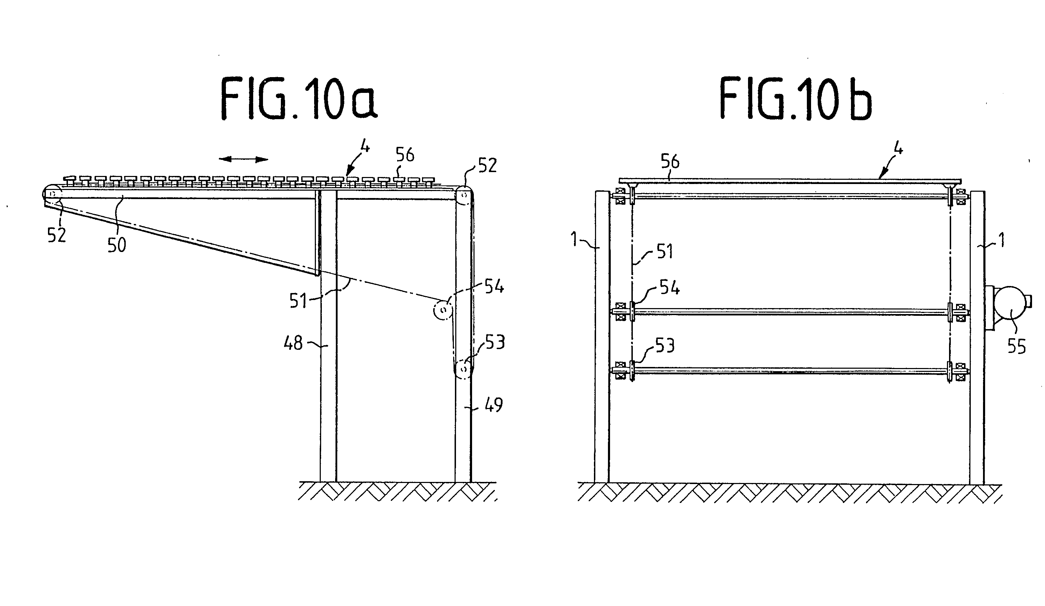

Die Fig. 10a,b zeigen die Gestellrahmenteile 1, welche aus zwei parallelen vertikalen Gestellstützen 48, 49 sowie einem auf diesen befestigten horizontalen Gestellauslegerarm 50 gebildet sind, der nach Art eines Kragträgers noch zusätzliche Abstützungen trägt. Auf der Oberseite des horizontalen Gestellauslegerarmes 50 und auf der rückwärtigen Seite der vertikalen Gestellstütze 49 sind Rollenketten 51 um zwei Umlenkrollen 52 und eine Spannrolle 53 sowie eine weitere Rolle 54 geführt, welche auf der Antriebsachse eines Motors 55 gelagert ist. Die einzelnen Glieder der Rollenketten 51 sind quer über das Gestell, d.h. zwischen beiden Gestellrahmenteilen 1 mittels Jalousiestäben 56 verbunden, welche auf beiden Längsseiten abgeschrägt sind und welche zur Aufnahme einer Stapellage 5 aus mehreren nebeneinander und hintereinander angeordneten Stapelgutelementen 24 dienen. In Fig. 10a ist die Jalousie 4 auf der Oberseite der Gestellrahmenteile 1 dargestellt. Durch eine Bewegung der Rollenketten 50 in Richtung auf die rückwärtige Seite der Gestellrahmenteile 1, d.h. auf die Rückseite der vertikalen Gestellstütze 49,kann die Jalousie 4 aus der horizontalen Ebene teilweise in die vertikale Ebene umgelenkt werden. Dies dient zur Ablage einer Stapellage 5 auf dem Stapel 2,wie es später noch beschrieben werden wird

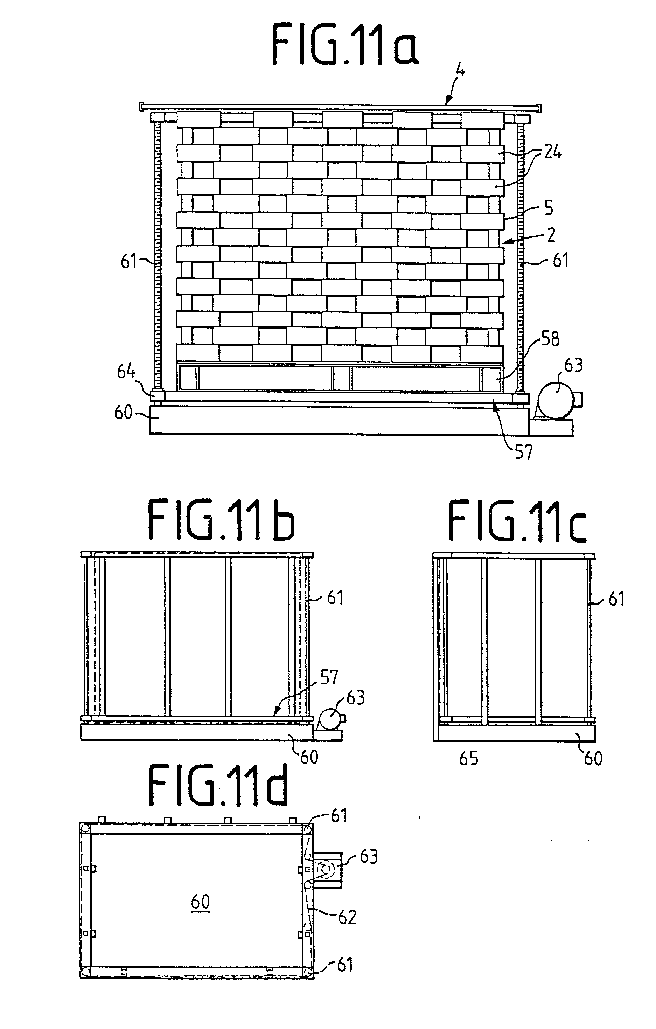

Die Fig. 11a zeigt die Jalousie 4 oberhalb eines auf einem Hubtisch 57 und einer auf diesem gelagerten Palette 58 abgelegten Stapels 2 aus einzelnen Stapelgutelementen 24. Der Hubtisch 57 besteht aus einer Grundplatte 60, in deren vier Ecken Hubspindeln 61 gelagert sind. Diese sind über eine Rollenkette 62, deren Kettenführung in Fig. 11d dargestellt ist und die von einem Antriebsmotor 63 betätigt wird, angetrieben. Auf diesen laufen Hubspindelschlitten 64, welche den eigentlichen Hubtisch 57 tragen. Dieser ist somit stufenlos in der Höhe einstellbar und kann mit der jeweils darauf gebildeten Stapellage 5 aus einzelnen Stapelgutelementen 24 bis dicht unter die Jalousie 4 gefahren werden, um eine auf dieser gebildete Lage 5 aus Stapelgutelementen 24 auf die bereits auf dem Stapel 2 abgelegte Stapellage abzuschieben. Auf der rückwärtigen Seite des Hubtisches 57 ist ein Rückhalteblech 65 angeordnet, das sich über die volle Höhe und Breite des Hubtisches 57 erstreckt und das auf der rückwärtigen Seite der Stapelvorrichtung angeordnet ist und mit dem Abschiebebalken 46 in später noch beschriebener Weise zusammenwirkt.

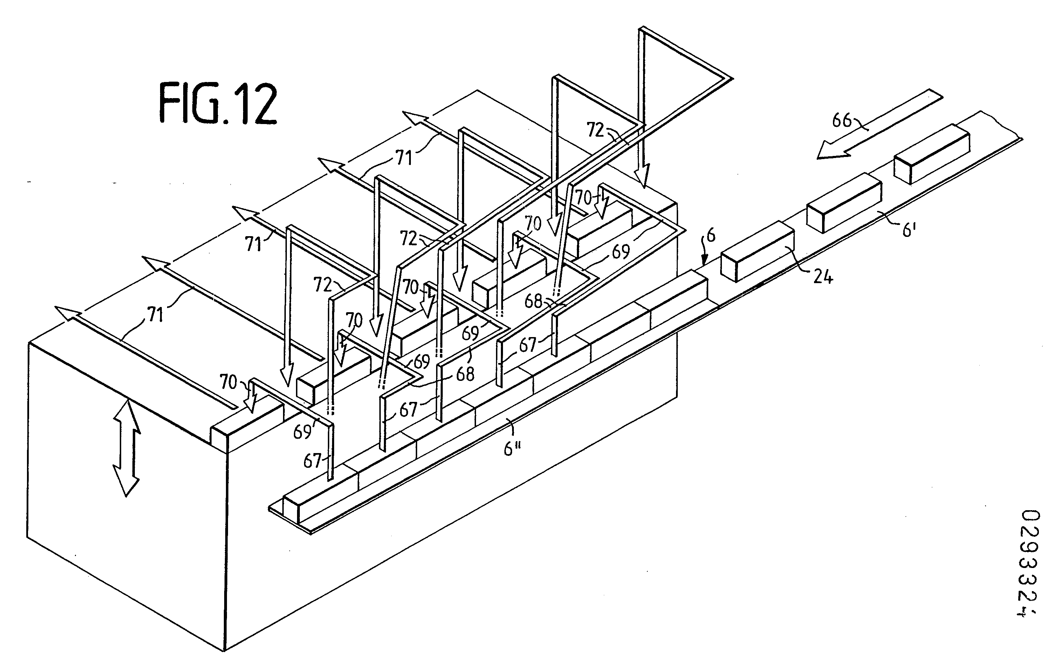

Die Fig. 12 zeigt eine Prinzipskizze zur Erläuterung der Funktionsweise der Stapelvorrichtung. Diese ist zur Stapelung von kurzen Stapelgutelementen 24 bestimmt, welche im Ausführungsbeispiel Friesen, d.h. Parketthölzer sind. Die Abmessungen dieser Friesen sind : Länge 140 bis 1500 mm; Breite: 30 bis 150 mm; Höhe: 25 bis 85 mm. Die Zuführung dieser Friesen erfolgt über den Förderer 6 mit einer Zuführgeschwindigkeit von 60 Stück pro Minute. Der Förderer 6 umfaßt einen Zuförderer 6'(Förderband),der die Friesen 24 gemäß Pfeil 66 von der vorherigen Bearbeitungsmaschine zuführt. Der weitere Förderer 6″ läuft in Gegenrichtung um. Beide Förderer 6' und 6″ sind über einen gemeinsamen Antriebsmotor und eine gemeinsame Antriebskette betrieben. Durch die gegenläufige Bewegung des Förderers 6″ werden die Friesen 24 immer in Richtung auf das durch das vordere Ende des Zuförderers 6' gekennzeichnete rechte Ende des Förderers 6″ geführt, solange bis eine ununterbrochene Reihe von Friesen auf dem Förderer 6″ angestaut ist. Im Ausführungsbeispiel sind sieben Friesen 24 angestaut. Fünf werden gemeinsam mittels der Spannzylinder 23 der Greif- und Hubelemente 90 zwischen den Backen 19 und 21 eingespannt, wie es in Fig. 3a gezeigt ist. Anschließend erfolgt ein Anheben der Friesen mittels der Hubzylinder 16. Im Ausführungsbeispiel sind fünf Greif- und Hubelemente 90 vorgesehen, so daß auch fünf Friesen gleichzeitig angehoben werden können. Das Anheben ist durch die vertikalen Pfeilstriche 67 in Fig. 12 gezeigt. Anschließend werden die an den Wagen 12 befindlichen Greif- und Hubelemente 90 in Richtung des Förders 6″ gemäß Pfeil 68 verfahren. Das Verfahren erfolgt mittels der in Fig. 6 dargestellten Zahnriemen 30, wobei gemäß Fig. 6 der linke Rahmenendteil 13 mit dem linken Greif- und Hubelement stehen bleibt und die übrigen Wagen 12 über unterschiedliche Wegstrecken in gleicher Zeit verfahren werden, wie es anhand der Fig. 6 und der zugehörigen Beschreibung erläutert worden ist. Die einzelnen Friesen 24 befinden sich nun in Längsrichtung gesehen in Abständen voneinander. Durch Verfahren des Rahmenträgers 8 in Richtung der Pfeile 69 werden die Greif- und Hubelemente 90 mit den darin geklemmten Friesen 24 nun auf die Jalousie 4 umgesetzt und dort in Richtung der Pfeile 70 abgesetzt. Das Absetzen erfolgt auf der Vorderseite der Abschiebeleiste 46, welche nach dem Lösen der Greifzangen 20betätigt wird und die Friesen 24 um eine kleine Wegstrecke in Richtung der Pfeile 71 abschiebt. Beim Abschieben werden bereits auf der Jalousie 4 befindliche Friesen 24 weitergeschoben, solange bis eine Stapellage 5 auf der Jalousie 4 gebildet ist. Diese wird anschließend nach rückwärts verfahren, d.h. in dem Pfeil 71 entgegengesetzter Richtung. Dabei wird die auf der Jalousie 4 gebildete Stapellage 5 auf den darunter befindlichen Hubtisch 57 bzw. auf die auf diesem bereits gebildete Stapellage 5 abgeschoben. Die bereits abgelegte Stapellage 5 wird durch das Rückhalteblech 65 (Fig. 4c) an einem Verschieben nach rückwärts gehindert. Die gerade abgelegt werdende Stapellage 5 wird von der Abschiebeleiste 46 an einerBewegung nach rückwärts gehindert, wozu die Abschiebeleiste 46 in ihre vordere Endstellung ausgefahren ist. Nach dem Ablegen der Stapellage 5 wird der Hubtisch 57 um die Höhe einer Stapellage abgesenkt, woraufhin die Jalousie 4 dann wieder über den Stapel 59 in Richtung der Pfeile 71 ausgefahren wird, so daß die Bildung einer neuen Stapellage 5 durchgeführt werden kann.

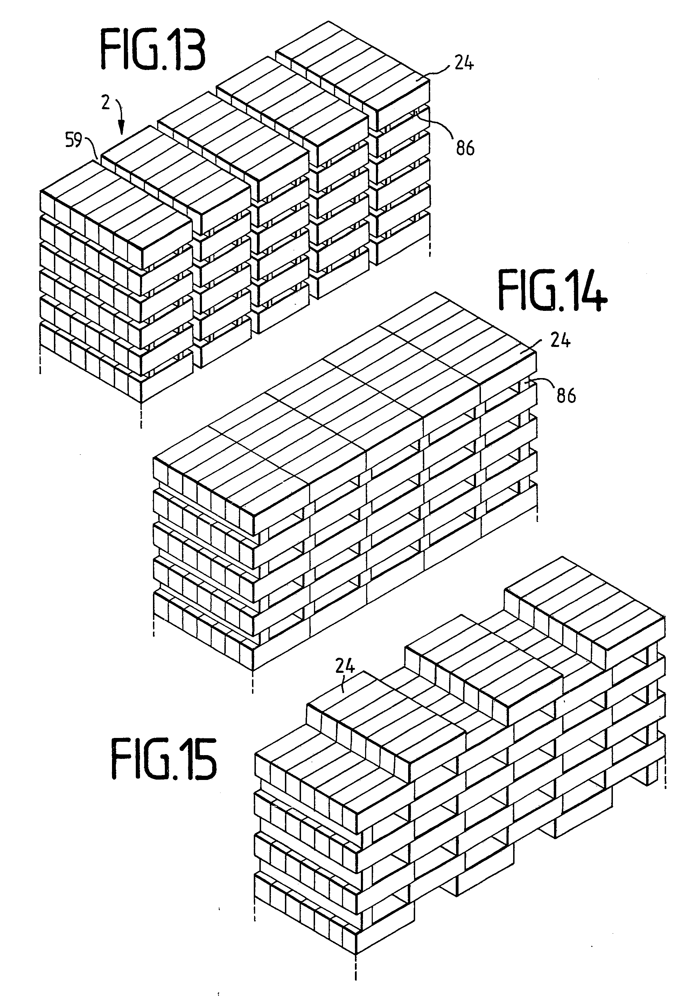

Der gebildete Stapel ist in Fig. 13 dargestellt, in welcher auch Zwischenleisten 86 dargestellt sind, welche in später noch beschriebener Weise vor dem Zurückfahren der Jalousie 4 auf die abgelegte Stapellage 5 gelegt werden, welche dann noch zusätzlich um die Dicke der Zwischenleisten 86 abgesenkt werden muß. Der in Fig. 13 dargestellte Stapel weist fünf Friesen 24 in einer Lage nebeneinander auf, die mit Lücken 59 gestapelt sind . Der Stapel 2 ist beidseitig bündig gestapelt .

Die Fig. 14 zeigt einen ähnlichen Stapel, der jedoch ohne Lücken gestapelt ist. Hierbei ist die Verfahrbewegung der Wagen 12 in Richtung der Pfeile 68 nicht ausgeführt worden, so daß die auf dem Förderband 6″ aneinander stoßenden Friesen 24 auf den Stapel 2 gesetzt werden, ohne daß diese auf Abstand verfahren worden sind.

Die Fig. 15 zeigt einen Stapel, bei dem die Friesen 24 mauerwerksartig versetzt angeordnet sind, wobei jedoch keine Zwischenleisten dargestellt sind. Um diesen Stapel auszubilden, muß nach dem Auseinanderfahren der Wagen 12 mit den an den Greif- und Hubelementen 90 hängenden Friese 24 der gesamte Rahmen 11 auf dem Rahmenträger 8 umgesetzt werden, wie es in Fig. 7a dargestellt und in Zusammenhang mit dieser Figur auch beschrieben worden ist. Es erfolgt dann ein Umsetzen des gesamten Rahmens11 gemäß den Pfeilen 72 in Fig. 12. Das Umsetzen erfolgt jedoch nur bei jeder zweiten Stapellage 5.Die übrigen Arbeitsabläufe entsprechen den zur Fig. 13 beschriebenen.

Die Fig. 16a und 16b zeigen einen Stapelleistenautomaten, der sich oberhalb des Stapels 2 erstreckt. Der Stapelleistenautomat umfaßt einen Tragrahmen 87 aus einem horizontalen Träger 73, einer vertikalen Stütze 74 und einem vertikalen Stützrahmen 75 aus zwei vertikalen Stützen 76 und zwei horizontalen Trägern 77. Unterhalb des horizontalen Trägers 73 ist eine Zuführbahn ausgebildet, an welcher eine Spannzange 78 verfahrbar angeordnet ist, die quer über den Stapel 2 verfahrbar ist. Neben dem Stapel 2 ist ein Vorratsraum 79 für Stapelleisten gebildet, welche über ein Vereinzelungsrad 80 unten abgezogen und über eine Rutsche 81 einem vertikalen Umlaufförderer 82 zugeführt werden. Dieser weist Mitnehmer 83 auf, welche die einzelnen Zwischenleisten 86 nach oben fördern. Im oberen Bereich ist eine Aussortiervorrichtung 84 für krumme Zwischenleisten 86 angeordnet. Am oberen Ende des Umlaufförderers 82 ist ein kurzer horizontaler Zwischenförderer 85 ausgebildet, der als Zwischenablage für die Zwischenleisten 86 dient. Diese werden dort von der Spannzange 78 ergriffen und über den Stapel 2 gefahren und dort an genau definierten Stellen abgesetzt, wie es die in Fig. 13 und Fig. 14 gezeigten Stapelmuster erfordern.

In nicht näher dargestellter Weise kann oberhalb des Stapels 59 noch ein Lamellenvorhang gelagert sein, welcher z.B. in der AT-PS 308.639 vorbeschrieben ist. Dieser Lamellenvorhang dient zum Einbringen von Lamellen zwischen die einzelnen Stapelgutelemente, damit diese beim Abschieben auf die Jalousie 4 nicht aneinander stoßen. Der Lamellenvorhang arbeitet somit parallel zur Abschiebeleiste 46. Bei Verwendung des Lamellenvorhanges können die Friesen in allen Richtungen auf Abstand voneinander gestapelt werden, so daß eine optimale Belüftung des Stapels möglich ist.

**Patentansprüche**

1. Stapelvorrichtung mit Einrichtungen zum Abheben des Stapelgutes von einem Förderer und zum Ablegen des Stapelgutes in einer Stapellage eines zu bildenden Stapels, **dadurch gekennzeichnet,** daß oberhalb des Förderers (6) mehrere Greif- und Hubelemente (90) zum Abheben des Stapelgutes (Friesen 24) vom Förderer (6) hintereinander an einem Rahmenträger (8) gelagert sind und daß der Rahmenträger (8) zum Absetzen des Stapelgutes (24) in der zu bildenden Stapellage (5) an einem Gestell (1,7) in eine zum Förderer (6) parallele Lage verfahrbar gelagert ist.

2. Stapelvorrichtung nach Anspruch 1, dadurch gekennzeichnet, daß die Greif- und Hubelemente (90) an am Rahmenträger (8) in Förderrichtung verfahrbaren Wagen (12) gelagert sind.

3. Stapelvorrichtung nach Anspruch 1 oder 2, dadurch gekennzeichnet, daß am Rahmenträger (8) ein Rahmen (11) verfahrbar gelagert ist und daß die Wagen (12) relativ zu den Rahmenendteilen (13,14) mittels an dieser gelagerter Umlauftriebe verfahrbar sind.

4. Stapelvorrichtung nach Anspruch 3, dadurch gekennzeichnet, daß die Umlauftriebe an den Rahmenendteilen (13,14) drehbar gelagerte Umlaufräder unterschiedlicher Durchmesser aufweisen und daß jeder Wagen (12) einem Umlaufelement zugeordnet und mit diesem fest verbunden ist, wobei dem Wagen (12) mit dem größten Verfahrweg der Umlauftrieb mit den im Durchmesser größten Umlaufrädern und dem Wagen (12) mit dem kleinsten Verfahrweg der Umlauftrieb mit den im Durchmesser kleinsten Umlaufrädern zugeordnet sind .

5. Stapelvorrichtung nach Anspruch 4, dadurch gekennzeichnet, daß die Umlaufräder aller Umlauftriebe auf an beiden Rahmenendteilen (13,14) gelagerten Wellen (28) angeordnet sind und daß eine Welle (28) mittels eines Getriebemotors (32) antreibbar und mit einem inkrementellen Drehaufnehmer (33) steuerbar ist.

6. Stapelvorrichtung nach einem der Ansprüche 4 oder 5, dadurch gekennzeichnet, daß als Umlauftriebe Zahnriementriebe (29,30) vorgesehen sind.

7. Stapelvorrichtung nach einem der Ansprüche 1 bis 6, dadurch gekennzeichnet, daß die Greif- und Hubelemente (90) mit Hub- und Greifzylindern (16 bzw.23) mit doppelten Kolbenstangen und die festen Backen (19) der Greifzangen(20) und die freien Enden der doppelten Kolbenstangen (22) der Spannzylinder (23) mit je zwei vertikal übereinander angeordneten Haltespitzen (25) versehen sind.

8. Stapelvorrichtung nach einem der Ansprüche 1 bis 7, dadurch gekennzeichnet, daß der aus den beiden Rahmenendteilen (13,14) und zwei Quadratrohren (15) gebildete Rahmen (11) auf dem Rahmenträger (8) in Förderrichtung und der Rahmenträger (11) im Gestell (1) quer zur Förderrichtung (Pfeil 66) verfahrbar gelagert sind.

9. Stapelvorrichtung nach Anspruch 8, dadurch gekennzeichnet, daß als Verfahrantrieb des Rahmens (11) auf dem Rahmenträger (8) ein weiterer Umlauftrieb, insbesondere Zahnriementrieb (40,44) vorgesehen ist, dessen Umlaufräder (40) auf Rahmenträgerendteilen (36,37) gelagert sind und mittels eines Getriebemotors (42) angetrieben und mittels eines inkrementellen Drehaufnehmers (43) steuerbar sind.

10. Stapelvorrichtung nach einem der Ansprüche 1 bis 9, dadurch gekennzeichnet, daß als Verfahrantrieb für den Rahmenträger (8) doppelt wirkende Zylinderkolbeneinheiten (Umsetzzylinder 9) am Gestell 1 gelagert sind.

11. Stapelvorrichtung nach einem der Ansprüche 1 bis 10, dadurch gekennzeichnet, daß das Gestell aus zwei seitlichen Gestellrahmenteilen (1) gebildet ist, zwischen denen der Stapel (59) auf einem Hubtisch (57) zu bilden ist, und daß an den horizontalen Gestellauslegerarmen (50) und an den rückwärtigen Gestellstützen (49) Rollenketten (51) geführt sind, wobei die einzelnen Glieder der Rollenketten (51) beider Gestellrahmenteile (1) mittels den Abstand zwischen diesen überbrückender Stapellagenträgerstangen (56) überbrückt sind, welche eine Jalousie (4) bilden, die aus der Ebene der horizontalen Gestellauslegerarme (50) zur Aufnahme der Stapellage in die Ebene der rückwärtigen vertikalen Gestellstützen (49) zum Abschieben der gebildeten Stapel lage auf den Stapel (59) verfahrbar ist. 12. Stapelvorrichtung nach Anspruch 11, dadurch gekennzeichnet, daß die Längsseitenkanten der Jalousiestangen (56) abgeschrägt sind.

13. Stapelvorrichtung nach einem der Ansprüche 1 bis 12, dadurch gekennzeichnet, daß am rückwärtigen Ende des Gestelles (1) oberhalb der Jalousie (4) eine Abschiebeleiste (46) mittels an den Gestellrahmenteilen (1) gelagerter Abschiebezylinder (47) hin - und herbewegbar ist.

14. Stapelvorrichtung nach einem der Ansprüche 1 bis 13, dadurch gekennzeichnet, daß dem Hubtisch (57) zur Aufnahme des Stapels (59) ein Rückhalteblech (65) zugeordnet ist, das sich in der Ebene der vertikalen Gestellrahmenteile (49) erstreckt.

15. Stapelvorrichtung nach einem der Ansprüche 1 bis 14, dadurch gekennzeichnet, daß der Hubtisch (57) aus einer Platte mit in den vier Eckpunkten angeordneten Hubspindelschlitten (64) ausgebildet ist, die auf vertikalen, motorisch angetriebenen Hubspindeln (61) laufen.

16. Stapelvorrichtung nach einem der Absprüche 1 bis 15, dadurch gekennzeichnet, daß an der Zufuhrseite der Stapelvorrichtung ein Stapelleistenautomat angeordnet ist.

17. Stapelvorrichtung nach einem der Ansprüche 1 bis 16 , dadurch gekennzeichnet , daß unterschiedlich lange Stapelelemente (24) ohne Lücke ( Luftspalt) stapelbar sind .

029332~

FIG.1

FIG.2

0293324

FIG.3b  FIG.3a

FIG.3c

# FIG.4c

# FIG.4a

# FIG.4b

# FIG.4d

# FIG.5c

# FIG.5a

# FIG.5b

# FIG.5d

0293324

FIG.6

FIG.7a
FIG.7b
FIG.7c
FIG.7d

029332

## FIG.8b

## FIG.8a

## FIG.8c

## FIG.9b

## FIG.9a

## FIG.9c

# FIG.10a

# FIG.10b

56

4

56

52

52

50

51

54

51

54

48

53

53

49

1

1

55

029332'4

# FIG.11a

# FIG.11b

# FIG.11c

# FIG.11d

029332⁴

FIG.12

0293324

FIG.13

FIG.14

FIG.15

24

86

59

2

24

86

24

# FIG.16a

# FIG.16b

0293324